# EUROPÄISCHE PATENTSCHRIFT

(11) **EP 1 074 461 B1**
(45) Veröffentlichungstag und Bekanntmachung des Hinweises auf die Patenterteilung: **22.10.2003**
(21) Anmeldenummer: 00116328.6
(22) Anmeldetag: 27.07.2000
(51) Int. Cl.: B62J 11/00, B62H 5/00

(54) **Halterungseinrichtung**
Supporting device
Dispositif de support

(30) Priorität: 06.08.1999 DE 19937233
(43) Veröffentlichungstag der Anmeldung: 07.02.2001
(73) Patentinhaber: ABUS August Bremicker Söhne KG, 58300 Wetter-Vollmarstein (DE)
(72) Erfinder:
(74) Vertreter: Manitz, Finsterwald & Partner

(56) Entgegenhaltungen:
- EP-A- 0 360 335
- EP-A- 0 832 812
- DE-A- 4 312 032
- DE-A- 4 312 033
- US-A- 5 386 961
- US-A- 5 669 536

## Beschreibung

Die Erfindung betrifft eine Halterungseinrichtung zur lösbaren Halterung eines einen zylindrischen Bügelabschnitt aufweisenden Bügelschlosses an einem Zweirad, mit einem zweiradseitigen Befestigungsteil, das einen Befestigungsabschnitt zur dauerhaften Befestigung des Befestigungsteils an dem Zweirad aufweist, sowie mit einem schloßseitigen Verbindungsteil zur Ermöglichung einer in variabler Winkelstellung erfolgenden Steckverbindung zwischen dem Bügelschloß und dem Zweirad.

Eine derartige Halterungseinrichtung ermöglicht die zeitweilige Anbringung des Schlosses an dem Zweirad, insbesondere an einem Fahrrad oder Motorrad, beispielsweise um das Schloß während der Fahrt mitzuführen. Für diese zeitweilige Halterung des Schlosses wirken das Befestigungsteil und das Verbindungsteil in einer Steckverbindung zusammen. Um eine individuelle Anpassung an den Zweiradrahmen zu ermöglichen, kann die Winkelstellung des Schlosses relativ zu dem am Zweirad befestigten Befestigungsteil vom Benutzer variabel gewählt und eingestellt werden.

Aus der EP 0 832 812 A2 ist eine derartige Halterungseinrichtung zur Halterung eines Bügelschlosses bekannt, die an dem Zweirad befestigt ist und einen hohlzylindrischen Durchsteckkanal aufweist. An einem Schenkel des Bügelschlosses ist eine Schenkelummantelungshülse angebracht, die für das Mitführen des Schlosses während der Fahrt in den Durchsteckkanal der zweiradseitigen Halterungseinrichtung eingesetzt wird. Am Außenumfang der Schenkelummantelungshülse und an der Innenumfangsfläche des Durchsteckkanals sind mit einem Teilungswinkel von 45° Drehsicherungsrippen bzw. -nuten vorgesehen, die ein Einführen des Bügelschenkels in einem entsprechenden Raster unterschiedlicher Winkelstellungen ermöglichen und die ein Verdrehen des eingeführten Bügelschenkels verhindern.

Das Dokument US-A-5386961 zeigt eine Halterungseinrichtung entsprechend dem Oberbegriff von Anspruch 1.

Nachteilig an den bekannten Halterungseinrichtungen ist, daß diese - selbst bei Wahl eines kleinen Teilungswinkels - keine völlig freie Wahl der Winkelstellung des befestigten Schlosses ermöglichen, und daß außerdem die Schloßbefestigung nicht leicht zu bewerkstelligen ist.

Es ist eine Aufgabe der Erfindung, eine Halterungseinrichtung zu schaffen, die bei geringem Herstellungs- und Materialaufwand eine einfache und sichere Halterung des Schlosses am Zweirad in beliebiger Winkelstellung ermöglicht.

Diese Aufgabe wird für eine Halterungseinrichtung der eingangs genannten Art dadurch gelöst, daß das Verbindungsteil einen Hülsenabschnitt aufweist, der den Bügelabschnitt des Bügelschlosses in drehbeweglicher Weise dauerhaft umgreift, wobei mittels eines Winkelfixierungsmittels eine wählbare Winkelstellung von Verbindungsteil und Bügelabschnitt des Bügelschlosses relativ zueinander einstellbar ist und wobei der Hülsenabschnitt den Bügelabschnitt vorzugsweise in stufenlos drehbeweglicher Weise umgreift; daß ferner das Verbindungsteil ein bezüglich der Längsachse des Hülsenabschnitts radial nach außen versetztes Einführelement aufweist und das Befestigungsteil ein zu dem Einführelement komplementäres Einführgegenstück aufweist, wobei das Einführelement und das Einführgegenstück miteinander eine Schienen-/Nut-Steckverbindung ermöglichen; und daß die Steckverbindung zwischen Verbindungsteil und Befestigungsteil Richtung durch Verriegeln des Bügelschlosses sicherbar ist.

Das Verbindungsteil ist also dauerhaft, bei gelöstem Winkelfixierungsmittel jedoch in drehbeweglicher Weise an dem Bügelabschnitt des Schlosses befestigt. Bei diesem Bügelabschnitt handelt es sich typischerweise um einen Längsabschnitt eines Schenkels des Bügelschlosses. Das genannte Winkelfixierungsmittel ermöglicht es dem Benutzer, eine gewünschte, eingestellte Winkelstellung einmalig zu sichern, so daß diese Winkelstellung auch bei allen nachfolgenden Halterungsvorgängen eingenommen wird.

Die Verbindung zwischen Schloß und Zweirad erfolgt über eine Schienen-/Nut-Steckverbindung, die bezüglich der Längsachse des Bügelabschnitts des Schlosses radial nach außen versetzt, also exzentrisch angeordnet ist. Im Gegensatz zum Stand der Technik ist also kein zweiradseitiger Durchsteckkanal vorgesehen, in den das Schloß zur zeitweiligen Halterung eingeführt wird. Statt dessen wird das Schloß von dem Hülsenabschnitt des Verbindungsteils dauerhaft umgriffen.

Damit die Schienen-/Nut-Steckverbindung zwischen Verbindungsteil und Befestigungsteil sich nicht unbeabsichtigt löst, wird sie durch Verriegeln des Bügelschlosses gesichert, nämlich indem ein mit dem Schloßbügel verriegelter Schloßkörper an der Halterungseinrichtung anliegt und dadurch ein Lösen der Steckverbindung sperrt.

Ein besonderer Vorteil der Erfindung besteht darin, daß die gewünschte Winkelstellung vom Benutzer einmalig eingestellt und fixiert werden kann, so daß der Benutzer nicht bei jedem Halterungsvorgang die Winkelstellung neu suchen oder auswählen muß, wie dies bei der Rasterlösung des Standes der Technik der Fall ist.

Ein weiterer Vorteil besteht darin, daß die Fixierung der Winkelstellung des eingesteckten Schlosses nicht indirekt durch Teilungsmittel (Rippen und Nuten) erfolgt, sondern durch ein eigenes Winkelfixierungsmittel. Dieses ermöglicht eine gewaltsame Winkelverdrehung des eigentlich winkelfixierten Schlosses relativ zum Zweirad. Eine derartige Winkelverdrehung kann unbeabsichtigt beispielsweise bei einem Sturz oder beim Umfallen des Zweirads eintreten. Im Gegensatz zu der Rasterlösung des Standes der Technik führt eine solche unbeabsichtigte Winkelverdrehung jedoch nicht zum Abbrechen eines Winkelteilungsrasters oder gar der Halterungseinrichtung. Diese Möglichkeit der gewaltsamen Winkelverdrehung besteht insbesondere dann, wenn das Verbindungsteil den Bügelabschnitt des Schlosses stufenlos glatt umgreift.

Weiterhin ermöglicht die Erfindung eine besonders einfache Bewerkstelligung der Steckverbindung zwischen Schloß und Zweirad, da das hierfür vorgesehene Einführelement und Einführgegenstück jeweils an der Außenseite von Verbindungsteil bzw. Befestigungsteil vorgesehen und deshalb für den Benutzer gut sichtbar sind. Im Gegensatz hierzu ist beim Stand der Technik das Winkelteilungsraster für den Benutzer verdeckt, so daß beim Einführen des Schlosses - selbst bei Vorsehung zusätzlicher Zentrierhilfen - ein "Nachdrehen" desselben, also eine suchende Drehbewegung erforderlich sein kann.

Schließlich vermeidet die Erfindung auch eine unmittelbare Beeinträchtigung des Schloßaufbaus. Insbesondere ist es für die Vorsehung der erfindungsgemäßen Halterungseinrichtung nicht erforderlich, an dem Schloß eine Einkerbung oder einen zusätzlichen Ansatz anzubringen, die als unerwünschter Angriffspunkt für ein gewaltsames Öffnen des verriegelten Schlosses dienen könnten.

Die erläuterte inhärente Sicherung der Halterung des Schlosses erfolgt auf einfache Weise und für den Benutzer ohne zusätzlichen Betätigungsaufwand allein durch Verriegeln des Schloßkörpers am bereits eingesteckten Schloßbügel.

In einer besonders vorteilhaften Ausführungsform der Erfindung kann die Winkelstellung zwischen Schloß und Zweirad - im Gegensatz zu der Rasterlösung des Standes der Technik - stufenlos erfolgen. Der Benutzer ist bei der individuellen Anpassung des Schlosses also nicht auf die vom Hersteller vorgegebenen Teilungswinkel angewiesen, sondern kann beliebige Zwischenstufen bzw. Winkelstellungen einstellen. Demgegenüber kann der Teilungswinkel beim Stand der Technik vom Hersteller nicht beliebig gering gewählt werden. Die Teilungsmittel, insbesondere zusammenwirkende Rippen und Nuten, sichern nämlich gleichzeitig das Schloß gegen ein unbeabsichtigtes Verdrehen, so daß eine weitere Verringerung des Teilungswinkels und die damit verbundene Verringerung der Materialstärke des Teilungsmittels bzw. Drehsicherungsmittels zu Lasten der Stabilität und Bruchsicherheit gehen würde.

In einer weiteren bevorzugten Ausführungsform ist die Schienen-/Nut-Steckverbindung zwischen Einführelement des Verbindungsteils und Einführgegenstück des Befestigungsteils dadurch realisiert, daß das Einführelement als längliche Ankerschiene T-förmigen Querschnitts und das Einführgegenstück als hierzu komplementäre Aufnahmenut mit einer im Querschnitt C-förmigen Umrandung ausgebildet ist, oder umgekehrt.

Weiterhin ist bevorzugt, wenn das genannte Winkelfixierungsmittel zumindest durch einen Reibungsschluß zwischen dem Hülsenabschnitt des Verbindungsteils und dem Bügelabschnitt des Schlosses gebildet ist, wobei das dadurch erzielte Reibungsmoment jenes Drehmoments, das aus der Gewichtskraft des gehaltenen Schlosses resultiert, vorzugsweise übersteigt.

Zu diesem Zweck ist es vorteilhaft, wenn der Innendurchmesser des Hülsenabschnitts dem Außendurchmesser des Bügelabschnitts des Schlosses entspricht, insbesondere in Form eines Klemmsitzes. Als Außendurchmesser des Bügelabschnitts ist in diesem Zusammenhang insbesondere der Außendurchmesser des Metallkerns eines Bügelschenkels ohne eine mögliche, den Bügelschenkel an anderer Stelle umgebende Kunststoffummantelung zu verstehen, oder der Außendurchmesser eines Bügelschenkels einschließlich einer solchen Kunststoffummantelung.

Alternativ oder zusätzlich kann das Winkelfixierungsmittel durch eine in dem Verbindungsteil gehaltene Fixierschraube gebildet sein, deren Vorderende an dem Bügelabschnitt des Schlosses angreift, und zwar insbesondere radial bezüglich der Längsrichtung des Bügelabschnitts. Vorzugsweise ist die Schraube bei in der Halterung befindlichem Schloß bzw. Verbindungsteil verdeckt.

Damit bei deaktiviertem Winkelfixierungsmittel, insbesondere bei überwundenem Reibungsmoment bzw. bei gelöster Fixierschraube, das Verbindungsteil noch stufenlos relativ zu dem Bügelschloß verdreht werden kann, sind sowohl die Innenumfangsfläche des Hülsenabschnitts des Verbindungsteils als auch die Außenmantelfläche des Bügelabschnitts des Schlosses vorzugsweise ausreichend glatt ausgebildet. Zur Ermöglichung einer stufenlosen Verdrehbarkeit besitzen diese beiden Flächen also keine zueinander komplementären Verzahnungen oder Längsnuten-/rippen.

Weiterhin ist es bevorzugt, wenn das Verbindungsteil und/oder das Befestigungsteil wenigstens ein Anschlagelement aufweist, das eine axiale Relativbewegung dieser beiden Teile, insbesondere eine Einsteckbewegung zur Realisierung der genannten Schienen-/Nut-Verbindung, begrenzt.

Weitere bevorzugte Ausführungsformen sind in den Unteransprüchen beschrieben.

Die Erfindung wird nachfolgend beispielhaft unter Bezugnahme auf die Zeichnungen erläutert; in diesen zeigen:
- Figur 1: ein an einem Rahmenteil gehaltenes Bügelschloß,
- Figur 2: einen Schenkel des Schlosses gemäß Figur 1,
- Figuren 3a - 3g: eine Perspektivansicht eines Verbindungsteils, eine weitere Perspektivansicht des Verbindungsteils, eine Seitenansicht des Verbindungsteils, eine Querschnittsansicht entlang der Ebene IIId - IIId, eine Querschnittsansicht entlang der Ebene IIIe - IIIe, eine weitere Seitenansicht sowie eine Querschnittsansicht entlang der Ebene IIIg - IIIg, und
- Figuren 4a - 4e: eine Perspektivansicht eines Befestigungsteils, eine weitere Perspektivansicht des Befestigungsteils, eine Frontansicht, eine Seitenansicht sowie eine Draufsicht des Befestigungsteils.

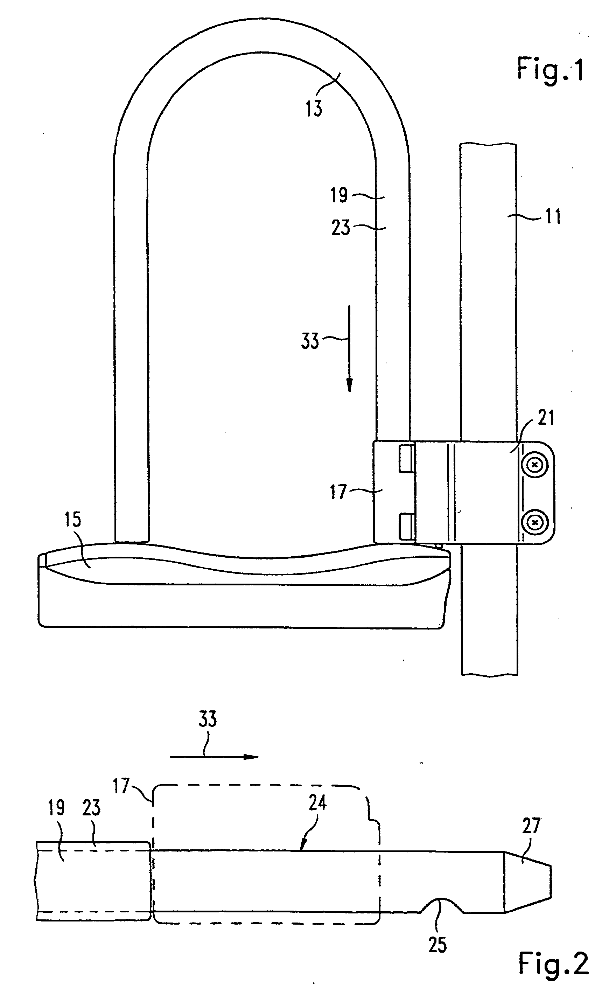

Figur 1 zeigt ein Bügelschloß, daß von einer Halterungseinrichtung an einem Teil eines Fahrradrahmens 11 gehalten wird. Das Bügelschloß besitzt einen U-förmigen Bügel 13, der im wesentlichen aus Metall besteht und in einem Schloßkörper 15 verriegelt ist. Die Halterungseinrichtung weist zum einen ein Verbindungsteil 17 auf, das einen Bügelschenkel 19 des Schloßbügels 13 umgreift. Zum anderen besitzt die Halterungseinrichtung ein Befestigungsteil 21, das an dem Fahrradrahmen 11 fixiert und mit dem Verbindungsteil 17 steckverbunden ist. Das Verbindungsteil 17 und das Befestigungsteil 21 bestehen aus Kunststoff.

Figur 2 zeigt den Bügelschenkel 19 ohne den Schloßkörper 15. Außerdem ist in Fig. 2 in gestrichelter Darstellung die Lage des an dem Bügelschenkel 19 angebrachten Verbindungsteils 17 dargestellt Der Bügelschenkel 19 ist teilweise mit einer Kunststoffummantelung 23 versehen. An deren stirnseitiges Ende schließt sich ein für die Aufnahme des Verbindungsteils 17 vorgesehener Bügelschenkelabschnitt 24 an. An seinem freien Ende besitzt der Bügelschenkel 19 eine Verriegelungseinbuchtung 25 sowie eine kegelstumpfförmige Einführspitze 27.

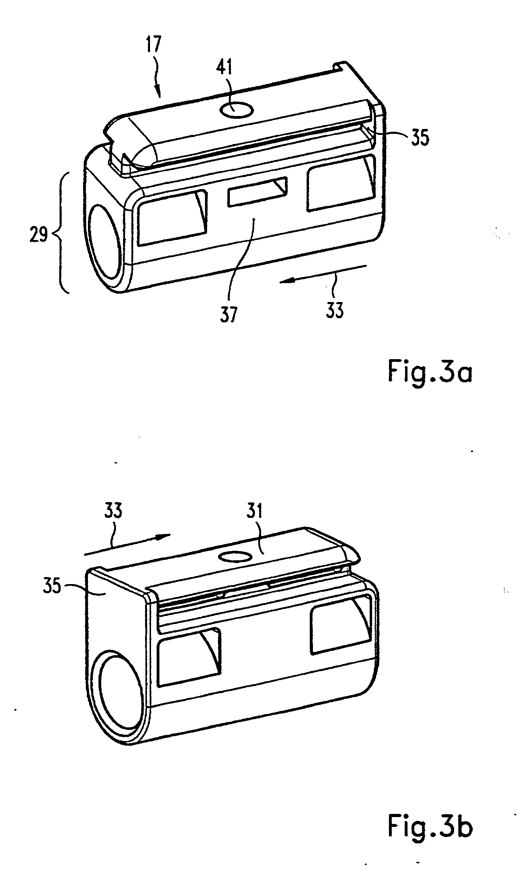

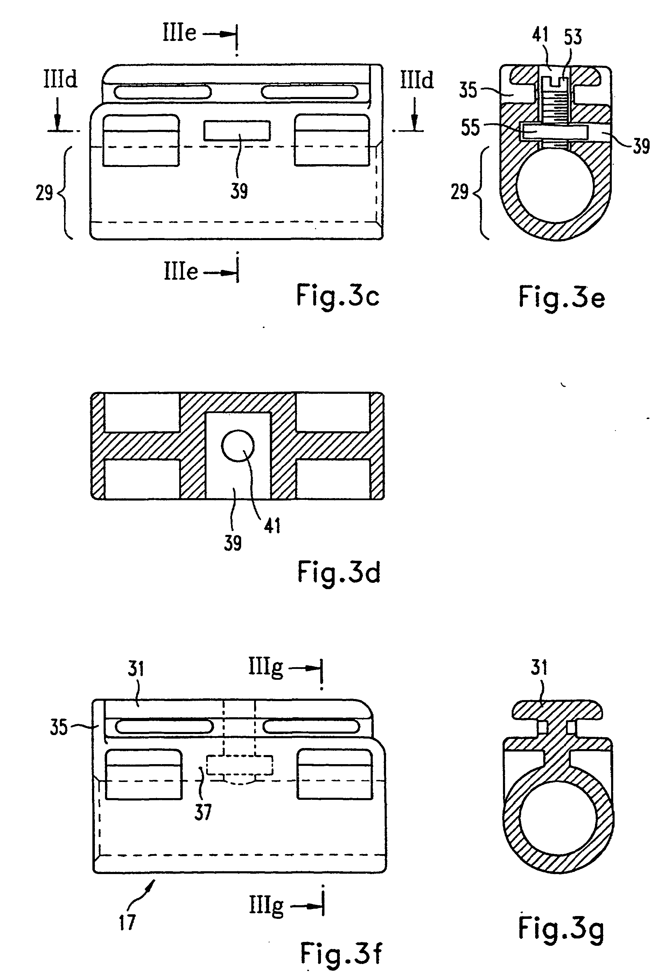

Figuren 3a bis 3g zeigen weitere Einzelheiten des Verbindungsteils 17. Dieses besitzt zur Klemmbefestigung an dem Bügelschenkel 19 einen hohlzylinderförmigen Hülsenabschnitt 29. Bezüglich dessen Längsachse radial nach außen versetzt ist eine parallel zu der Längsachse des Hülsenabschnitts 29 verlaufende, als Einführelement dienende T-förmige Ankerschiene 31 angeformt. Die Ankerschiene 31 ist an ihrem - bezüglich einer Einsteckrichtung 33 - vorderen Ende angefast und an ihrem hinteren Ende mit einem Anschlagelement in Form eines Stirnflächenansatzes 35 versehen, der sich senkrecht zu der Einsteckrichtung 33 und über den Querschnitt der Ankerschiene 31 hinaus erstreckt (Fig. 3b und 3e).

In einem zentralen Abschnitt des Verbindungsteils 17 sind der Hülsenabschnitt 29 und die Ankerschiene 31 über einen Verbindungsblock 37 miteinander verbunden. Dieser besitzt eine Mutterntasche 39, die sich parallel zu der Einsteckrichtung 33 erstreckt und lediglich zu einer Längsseite des Verbindungsteils 17 hin geöffnet ist. Außerdem ist die Mutterntasche 39 von einem Schraubenschacht 41 durchsetzt, welcher sich durch die Ankerschiene 31 und den Verbindungsblock 37 bis in den Innenhohlraum des Hülsenabschnitts 29 hinein senkrecht zur Einsteckrichtung 33 erstreckt.

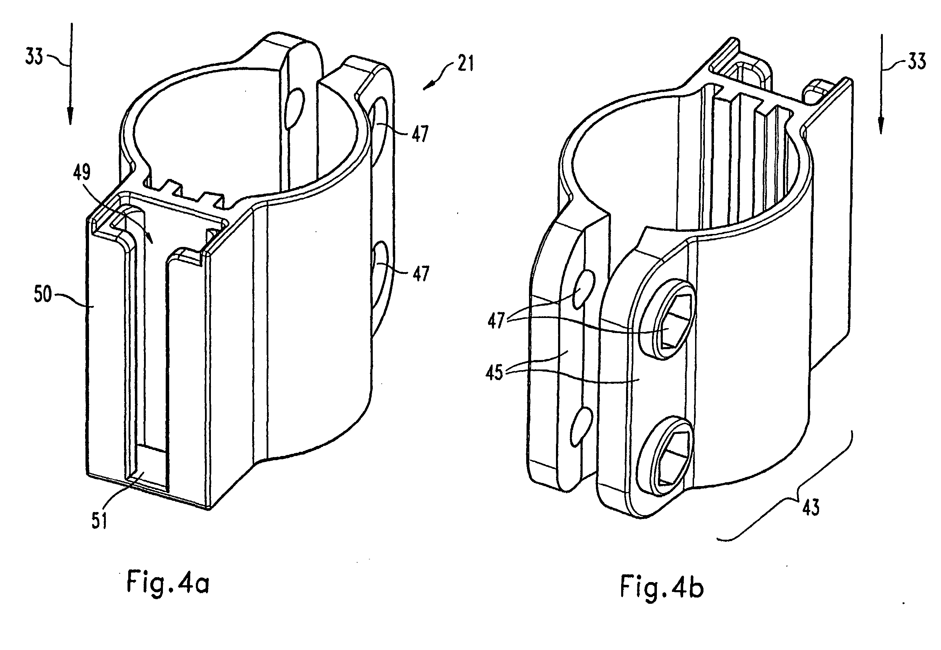

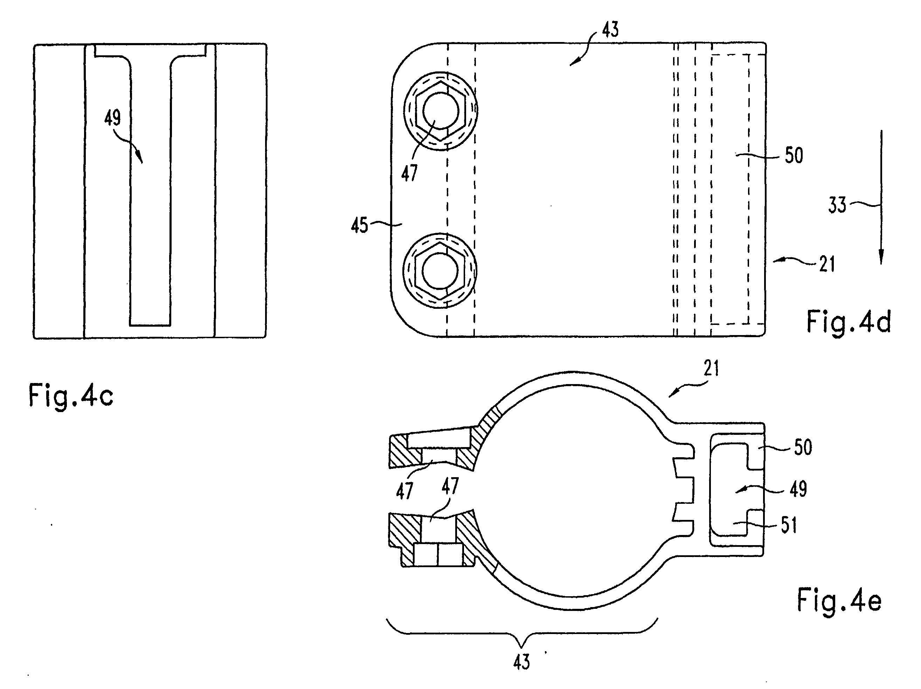

Wie aus den Figuren 4a - 4e ersichtlich, besitzt das Befestigungsteil 21 einen Befestigungsabschnitt 43, der zur dauerhaften Fixierung an dem Fahrradrahmen 11 dient und die Form eines längsgeschlitzten Hohlzylinders besitzt. An den freien Längskanten des Befestigungsabschnitts 43 sind zwei einander gegenüberstehende Befestigungslaschen 45 angeformt, die jeweils zwei Schraubenöffnungen 47 besitzen, welche jeweils mit der Schraubenöffnung 47 der gegenüberliegenden Befestigungslasche 45 fluchten.

Den Befestigungslaschen 45 gegenüberstehend ist eine T-förmige Aufnahmenut 49 vorgesehen, die durch einen an dem Befestigungsabschnitt 43 angeformten, längsgeschlitzten Aufnahmerahmen 50 C-förmigen Querschnitts gebildet ist und die sich parallel zu der Längsachse des Befestigungsabschnitts 43 bzw. zu der Einsteckrichtung 33 erstreckt. Die Aufnahmenut 49 ist als Einführgegenstück komplementär zu der Ankerschiene 31 des Verbindungsteils 17 ausgebildet.

Das der Einsteckrichtung 33 entgegengesetzte Ende des Aufnahmerahmens 50 ist angefast. Das in Einsteckrichtung 33 weisende Ende des Aufnahmerahmens 50 ist durch einen Stirnflächenansatz 51 geschlossen (Fig. 4a).

Die Einstellung und Funktionsweise der beschriebenen Halterungseinrichtung erfolgen wie folgt:

Auf den Bügelschenkelabschnitt 24 des Bügelschenkels 19 wird werkseitig das Verbindungsteil 17 aufgesetzt, wie in Fig. 2 angedeutet. Aufgrund eines Reibungsschlusses bzw. einer Klemmwirkung zwischen dem Verbindungsteil 17 und dem Bügelschenkelabschnitt 24 kann das aufgesetzte Verbindungsteil 17 nur noch unter Aufwendung eines Mindestdrehmoments bzw. einer Mindestkraft verdreht oder verschoben werden.

Zur einmaligen Anpassung der Halterungseinrichtung an das betreffende Fahrrad befestigt der Benutzer zunächst das Befestigungsteil 21 an dem Fahrradrahmen 11, indem der Befestigungsabschnitt 43 den Rahmen 11 umgreift und dort mittels zweier Schrauben, die durch die Schraubenöffnungen 47 geführt werden, klemmfixiert wird.

Sodann steckt der Benutzer den Bügel 13 mit dem aufgesetzten Verbindungsteil 17, und ohne Schloßkörper 15, derart in Einsteckrichtung 33 in das Befestigungsteil 21, daß die Ankerschiene 31 (Fig. 3a) in die Aufnahmenut 49 des Aufnahmerahmens 50 (Fig. 4a) eingreift. Nun kann der Benutzer durch Überwinden des Reibungsmoments zwischen dem Bügelschenkel 19 und dem Verbindungsteil 17 sowie durch entsprechendes stufenloses Drehen des Bügels 13 die gewünschte Winkelstellung des Bügels 13 relativ zu dem Fahrradrahmen 11 einstellen.

Nach Herausziehen des Bügels 13 aus dem Befestigungsteil 21 kann der Benutzer nun die zuvor eingestellte Winkelstellung fixieren, indem eine Fixierschraube 53, die als Madenschraube ausgebildet und in dem Schraubenschacht 41 des Verbindungsteils 17 angeordnet ist, mit einer Mutter 55 verschraubt wird, die seitlich in die Mutterntasche 39 eingesetzt ist (Fig. 3e). Durch dieses Verschrauben wird die Spitze der Fixierschraube 53, die auch konisch spitz ausgebildet sein kann, an die Mantelfläche des Bügelschenkelabschnitts 24 angedrückt, so daß das Verbindungsteil 17 hinsichtlich seiner Winkelstellung und seiner axialen Lage relativ zu dem Bügelschenkel 19 fixiert wird.

Für jede nachfolgende Halterung des Schlosses an dem Fahrradrahmen 11 kann der Benutzer über die nach außen gut sichtbare Ankerschiene 31 und den Aufnahmerahmen 50 die erforderliche Steckverbindung ohne weiteres bewerkstelligen, wobei der Bügel 13 automatisch die erwünschte und einmalig fixierte Winkelstellung einnimmt.

Bei dem Einstecken des Verbindungsteils 17 in das Befestigungsteil 21 begrenzen die beiden Stirnflächenansätze 35, 51 durch Anstoßen an dem jeweils zugeordneten Ende des Aufnahmerahmens 50 bzw. der Ankerschiene 31 die Einstecktiefe.

Dagegen wird ein unbeabsichtigtes Lösen des Schlosses vom Fahrradrahmen 11 entgegen der Einsteckrichtung 33 dadurch verhindert, daß der Schloßkörper 15 mit dem eingesteckten Bügel 13 verriegelt wird und bei einer Bewegung des eingesteckten Bügels 13 entgegen der Einsteckrichtung 33 an dem Befestigungsteil 21 anstößt (Fig. 1).

Zu dem erläuterten Ausführungsbeispiel ist noch zu erwähnen, daß das Verbindungsteil in axialer Richtung an dem Bügelschenkel 19 nicht nur durch den erläuterten Reibungsschluß und die genannte Fixierschraube fixiert ist, sondern auch durch Anliegen an der Stirnseite der Kunststoffummantelung 23 (Fig. 2) sowie - bei verriegeltem Schloß - durch Anliegen an dem Schloßkörper 15. Außerdem kann zum Zwecke der axialen Fixierung zwischen dem Verbindungsteil 17 und dem Bügelschenkel 19 ein Nocken-/Ringnut-Eingriff vorgesehen sein.

Weiterhin kann alternativ oder zusätzlich zu der C-förmigen Umgreifung des Fahrradrahmens 11 durch den Befestigungsabschnitt 43 des Befestigungsteils 21 eine Schellenverbindung vorgesehen sein.

Außerdem kann das Befestigungsteil 21 anstelle der Umgreifung eines Abschnitts des Fahrradrahmens 11 auch an einem Abschnitt eines Gepäckträgers oder eines Zubehörteils, und/oder an einem Motorrad befestigt sein.

Schließlich ist anzumerken, daß die Erfindung auch bei einem Kabelschloß, insbesondere einem Spiralkabelschloß realisiert werden kann, wobei ein Abschnitt des Schloßkabels, insbesondere einschließlich dessen Kunststoffummantelung, als der genannte Bügelabschnitt bzw. Bügelschenkelabschnitt dienen kann.

### Bezugszeichenliste

- 11: Fahrradrahmen
- 13: Bügel
- 15: Schloßkörper
- 17: Verbindungsteil
- 19: Bügelschenkel
- 21: Befestigungsteil
- 23: Kunststoffummantelung
- 24: Bügelschenkelabschnitt
- 25: Verriegelungseinbuchung
- 27: Einführspitze
- 29: Hülsenabschnitt
- 31: Ankerschiene
- 33: Einsteckrichtung
- 35: Stirnflächenansatz
- 37: Verbindungsblock
- 39: Mutterntasche
- 41: Schraubenschacht
- 43: Befestigungsabschnitt
- 45: Befestigungslasche
- 47: Schraubenöffnung
- 49: Aufnahmenut
- 50: Aufnahmerahmen
- 51: Stirnflächenansatz
- 53: Fixierschraube
- 55: Mutter

## Patentansprüche

1. Halterungseinrichtung zur lösbaren Halterung eines einen zylindrischen Bügelabschnitt (24) aufweisenden Bügelschlosses (13) an einem Zweirad (11),
- mit einem zweiradseitigen Befestigungsteil (21), das einen Befestigungsabschnitt (43) zur dauerhaften Befestigung des Befestigungsteils (21) an dem Zweirad (11) aufweist, sowie
- mit einem schloßseitigen Verbindungsteil (17) zur Ermöglichung einer in variabler Winkelstellung erfolgenden Steckverbindung zwischen dem Bügelschloß (13) und dem Zweirad (11); wobei das Verbindungsteil (17) einen Hülsenabschnitt (29) aufweist und ein bezüglich der Längsachse des Hülsenabschnitts (29) radial nach außen versetztes Einführelement (31) aufweist und das Befestigungsteil (21) ein zu dem Einführelement (31) komplementäres Einführgegenstück (49) aufweist, wobei das Einführelement (31) und das Einführgegenstück (49) miteinander eine Schienen-/Nut-Steckverbindung ermöglichen;
**dadurch gekennzeichnet,**
**daß** der Hülsenabschnitt (29) des Verbindungsteils (17) den Bügelabschnitt (24) des Bügelschlosses (13) in drehbeweglicher Weise dauerhaft umgreift, wobei mittels eines Winkelfixierungsmittels eine wählbare Winkelstellung von Verbindungsteil (17) und Bügelabschnitt (24) des Bügelschlosses relativ zueinander einstellbar ist und wobei der Hülsenabschnitt (29) den Bügelabschnitt (24) vorzugsweise in stufenlos drehbeweglicher Weise umgreift; und
**daß** die Steckverbindung zwischen Verbindungsteil (17) und Befestigungsteil (21) durch Verriegeln des Bügelschlosses (13) sicherbar ist.

2. Halterungseinrichtung nach Anspruch 1,
**dadurch gekennzeichnet,**
**daß** das Einführelement als eine im Querschnitt T-förmige Ankerschiene (31) und das Einführgegenstück als eine Aufnahmenut (49) mit hierzu komplementärem Querschnitt ausgebildet ist, oder umgekehrt.

3. Halterungseinrichtung nach einem der vorhergehenden Ansprüche,
**dadurch gekennzeichnet,**
**daß** der Innendurchmesser des Hülsenabschnitts (29) dem Außendurchmesser des Bügelabschnitts (24) entspricht.

4. Halterungseinrichtung nach einem der vorhergehenden Ansprüche,
**dadurch gekennzeichnet,**
**daß** die Innenumfangsfläche des Hülsenabschnitts (29) und die Außenmantelfläche des Bügelabschnitts (24) dergestalt glatt ausgebildet sind, daß bei deaktiviertem Winkelfixierungsmittel das Verbindungsteil (17) und der Bügelabschnitt (24) des Bügelschlosses (13) - insbesondere bei Anwendung eines bestimmten Mindestdrehmoments - stufenlos relativ zueinander verdrehbar sind.

5. Halterungseinrichtung nach einem der vorhergehenden Ansprüche,
**dadurch gekennzeichnet,**
**daß** das Winkelfixierungsmittel durch eine an dem Verbindungsteil vorgesehene Fixierschraube (53) gebildet ist, deren Spitze an den Bügelabschnitt (24) des Bügelschlosses (13) heranführbar ist.

6. Halterungseinrichtung nach einem der vorhergehenden Ansprüche,
**dadurch gekennzeichnet,**
**daß** das Winkelfixierungsmittel durch einen Reibungsschluß zwischen Hülsenabschnitt (29) und Bügelabschnitt (24) gebildet ist, dessen Reibungsmoment das von der Gewichtskraft des gehaltenen Bügelschlosses (13, 15) resultierende Drehmoment vorzugsweise übersteigt.

7. Halterungseinrichtung nach einem der vorhergehenden Ansprüche,
**dadurch gekennzeichnet,**
**daß** der Hülsenabschnitt (29) des Verbindungsteils (17) an dem Bügelschloß in axialer Richtung durch das Winkelfixierungsmittel, durch Anliegen an einer Ummantelung (23) des Bügelschlosses (13), durch Anliegen an einem Schloßkörper (15) des Bügelschlosses und/oder durch einen Nocken-/Ringnut-Eingriff zwischen Verbindungsteil und Bügelschloß fixiert ist.

8. Halterungseinrichtung nach einem der vorhergehenden Ansprüche,
**dadurch gekennzeichnet,**
**daß** an dem Verbindungsteil (17) und/oder dem Befestigungsteil (21) wenigstens ein Anschlagelement (35, 51) vorgesehen ist, das eine Einsteckbewegung (33) des Verbindungsteils (17) relativ zu dem Befestigungsteil (21) in axialer Richtung begrenzt,
wobei das Anschlagelement vorzugsweise als ein Stirnflächenansatz (35 bzw. 51) an einem Ende des Einführelements (31) und/oder des Einführgegenstücks (49) ausgebildet ist

9. Halterungseinrichtung nach einem der vorhergehenden Ansprüche,
**dadurch gekennzeichnet,**
**daß** die Längsrichtung des Hülsenabschnitts (29) des Verbindungsteils (17) parallel zu der Längsrichtung des Befestigungsabschnitts (43) des steckverbundenen Befestigungsteils (21) verläuft.

10. Halterungseinrichtung nach einem der vorhergehenden Ansprüche,
**dadurch gekennzeichnet,**
**daß** der Befestigungsabschnitt (43) des Befestigungsteils (21) einen Teil des Zweirads, insbesondere einen Rahmenabschnitt (11), umgreift, und zwar insbesondere mit einem C-förmigen Querschnitt und/oder mittels einer Fixierschelle.

## Claims

1. A holding device for the releasable holding of a hoop lock (13) comprising a cylindrical hoop section (24) to a two-wheeler (11),
- having a securing part (21) at the two-wheeler side which comprises a securing section (43) for the permanent securing of the securing part (21) to the two-wheeler (11), as well as
- having a connection part (17) at the lock side for the enabling of a plug-in connection between the hoop lock (13) and the two-wheeler (11) which takes place in a variable angle position, wherein the connection part (17) has a sleeve section (29) and has an insertion element (31) radially outwardly offset with respect to the longitudinal axis of the sleeve section (29) and the securing part (21) has a mating insertion counter piece (49) complementary to the insertion element (31), with the insertion element (31) and the mating insertion counter piece (49) making a rail and groove plug-in connection with one another
**characterised**
**in that** the sleeve section (29) of the connection part (17) engages permanently around the hoop section (24) of the hoop lock (13) in a rotationally movable manner, with a selectable angle position of the connection part (17) and of the hoop section (24) of the hoop lock being able to be set relative to one another by means of an angle fixing means, and with the sleeve section (29) preferably engaging around the hoop section (24) in a continuously adjustable rotationally moving manner; and
**in that** the plug-in connection between the connection part (17) and the fastening part (21) can be secured by latching the hoop lock (13).

2. A holding device in accordance with claim 1, **characterised in that** the insertion element is made as an anchor rail (31) with a T-shaped cross section and the mating insertion counter piece is made as a receiving groove (49) with a cross-section complementary thereto, or vice versa.

3. A holding device in accordance with any one of the preceding claims, **characterised in that** the internal diameter of the sleeve section (29) corresponds to the external diameter of the hoop section (24).

4. A holding device in accordance with any one of the preceding claims, **characterised in that** the inner peripheral surface of the sleeve section (29) and the outer jacket surface of the hoop section (24) are made so smooth that the connection part (17) and the hoop section (24) of the hoop lock (13) can be continually adjustably rotated with respect to one another - in particular on application of a specific minimum torque - when the angle fixing means is deactivated.

5. A holding device in accordance with any one of the preceding claims, **characterised in that** the angle fixing means is formed by a fixing screw (53) which is provided at the connection part and whose tip can be guided up to the hoop section (24) of the hoop lock (13).

6. A holding device in accordance with any one of the preceding claims, **characterised in that** the angle fixing means is formed by a frictional engagement between the sleeve section (29) and the hoop section (24) whose moment of friction preferably exceeds the torque resulting from the weight of the held hoop lock (13, 15).

7. A holding device in accordance with any one of the preceding claims, **characterised in that** the sleeve section (29) of the connection part (17) is fixed to the hoop lock in the axial direction by the angle fixing means, by contacting a jacket (23) of the hoop lock (13), by contacting a lock body (15) of the hoop lock and/or by a cam and ring groove engagement between the connection part and the hoop lock.

8. A holding device in accordance with any one of the preceding claims, **characterised in that** at least one abutment element (35, 51) is provided at the connection part (17) and/or at the securing part (21) and bounds an insertion movement (33) of the connection part (17) relative to the securing part (21) in the axial direction, wherein the abutment element is preferably made as an end face nose (35 or 51) at an end of the insertion element (31) and/or of the mating insertion counter piece (49).

9. A holding device in accordance with any one of the preceding claims, **characterised in that** the longitudinal direction of the sleeve connection (29) of the connection part (17) extends parallel to the longitudinal direction of the securing section (43) of the fastening part (21) in a plug-in connection.

10. A holding device in accordance with any one of the preceding claims, **characterised in that** the securing section (43) of the securing part (21) engages around a part of the two-wheeler, in particular around a frame section (11), and indeed in particular having a C-shaped cross-section and/or by means of a fixing clip.

## Revendications

1. Dispositif de support pour la fixation amovible, au niveau d'un deux-roues (11), d'un cadenas à arceau (13) muni d'une partie d'arceau (24) cylindrique,
- comprenant un élément de fixation (21) du côté du deux-roues, qui comporte une partie de fixation (43) pour la fixation permanente de l'élément de fixation (21) contre le deux-roues (11), et
- comprenant un élément d'assemblage (17) du côté du cadenas pour permettre un assemblage par emboîtement en position angulaire variable entre le cadenas à arceau (13) et le deux-roues (11) ; l'élément d'assemblage (17) étant muni d'une partie formant douille (29) et d'un élément d'emboîtement (31) décalé radialement vers l'extérieur par rapport à l'axe longitudinal de la partie formant douille (29), et l'élément de fixation (21) étant muni d'un pendant d'emboîtement (49), complémentaire de l'élément d'emboîtement (31), moyennant quoi l'élément d'emboîtement (31) et le pendant d'emboîtement (49) permettent de réaliser conjointement un assemblage par emboîtement à rail et rainure ;
**caractérisé en ce que** la partie formant douille (29) de l'élément d'assemblage (17) entoure de manière rotative et permanente la partie d'arceau (24) du cadenas à arceau (13), un moyen de blocage angulaire permettant de définir une position angulaire à sélectionner pour l'élément d'assemblage (17) et la partie d'arceau (24) du cadenas à arceau (13) l'un par rapport à l'autre, et la partie formant douille (29) entourant la partie d'arceau (24) de préférence de manière rotative sans gradation ; et **en ce que** l'assemblage emboîté entre l'élément d'assemblage (17) et l'élément de fixation (21) peut être bloqué par le verrouillage du cadenas à arceau (13).

2. Dispositif de support selon la revendication 1, **caractérisé en ce que** l'élément d'emboîtement est conçu sous forme de rail d'ancrage (31) avec une section en forme de T et le pendant d'emboîtement est conçu sous forme de rainure de réception (49) avec une section complémentaire dudit rail d'ancrage, ou inversement.

3. Dispositif de support selon une des revendications précédentes, **caractérisé. en ce que** le diamètre intérieur de la partie formant douille (29) correspond au diamètre extérieur de la partie d'arceau (24).

4. Dispositif de support selon une des revendications précédentes, **caractérisé en ce que** la surface périphérique intérieure de la partie formant douille (29) et la surface périphérique extérieure de la partie d'arceau (24) sont lisses de telle sorte que, lorsque le moyen de blocage angulaire est désactivé, l'élément d'assemblage (17) et la partie d'arceau (24) du cadenas à arceau (13) - en particulier en cas d'application d'un couple de rotation minimum - peuvent tourner sans gradation l'un par rapport à l'autre.

5. Dispositif de support selon une des revendications précédentes, **caractérisé en ce que** le moyen de blocage angulaire est formé par une vis de blocage (53), qui est prévue dans l'élément d'assemblage et dont l'extrémité peut être amenée en appui contre la partie d'arceau (24) du cadenas à arceau (13).

6. Dispositif de support selon une des revendications précédentes, **caractérisé en ce que** le moyen de blocage angulaire est formé par un assemblage par frottement entre la partie formant douille (29) et la partie d'arceau (24), dont le couple de frottement est de préférence supérieur au couple de rotation qui résulte du poids du cadenas à arceau (13, 15) maintenu.

7. Dispositif de support selon une des revendications précédentes, **caractérisé en ce que** la partie formant douille (29) de l'élément d'assemblage (17) est bloquée dans le sens axial sur le cadenas à arceau par le moyen de blocage angulaire, par la mise en appui contre une gaine en matière plastique (23) du cadenas à arceau (13), par la mise en appui contre un corps de serrure (15) du cadenas à arceau et/ou par un système de prise à téton et rainure circulaire entre l'élément d'assemblage et le cadenas à arceau.

8. Dispositif de support selon une des revendications précédentes, **caractérisé en ce que** sur l'élément d'assemblage (17) et/ou sur l'élément de fixation (21) est prévu au moins un élément de butée (35, 51), qui limite un mouvement d'introduction (33) de l'élément d'assemblage (17) par rapport à l'élément de fixation (21) dans le sens axial, l'élément de butée étant réalisé de préférence sous forme de butée frontale (35 et 51) sur une extrémité de l'élément d'emboîtement (31) et/ou du pendant d'emboîtement (49).

9. Dispositif de support selon une des revendications précédentes, **caractérisé en ce que** la direction longitudinale de la partie formant douille (29) de l'élément d'assemblage (17) s'étend parallèlement à la direction longitudinale de la partie de fixation (43) de l'élément de fixation (21) assemblé par emboîtement.

10. Dispositif de support selon une des revendications précédentes, **caractérisé en ce que** la partie de fixation (43) de l'élément de fixation (21) entoure une partie du deux-roues, en particulier une partie du cadre (11), à savoir en particulier avec une section en forme de C et/ou au moyen d'un collier de serrage.
